# EUROPEAN PATENT APPLICATION

(11) **EP 2 736 234 A2**
(43) Date of publication of application: **28.05.2014**
(21) Application number: 13193887.0
(22) Date of filing: 21.11.2013
(51) Int. Cl.: H04M 1/725, G06Q 10/10

(54) **Message-based conversation operation method and mobile terminal suporting the same**

(30) Priority: 21.11.2012 KR 20120132137
(71) Applicant: Samsung Electronics Co., Ltd, Gyeonggi-do 443-742 (KR)
(72) Inventor: Oh, Youngil, 443-742 Gyeonggi-do (KR); Ahn, Chansu, 443-742 Gyeonggi-do (KR)
(74) Representative: Birchenough, Lewis

(57) **Abstract**

A message-based conversation operation method and a mobile terminal supporting the same are disclosed. The method includes detecting user input for one or more messages, assigning contextual information to the messages according to the user input and storing the contextual information, and outputting a new display mode for the messages according to the contextual information.

## Description

### BACKGROUND OF THE INVENTION

### 1. Field of the Invention

Certain embodiments of the present invention provide a conversation (e.g. message exchange) operation method, apparatus, device and/or system, for example for a mobile terminal. More particularly, although not exclusively, certain embodiments of the present invention provide a message-based conversation operation method, apparatus and/or system that can assign contextual information to messages forming a conversation, and rearrange the messages according to the contextual information to enable a conversation participant to clearly understand the context of the conversation during utilization of a message-based conversation function, and a mobile terminal supporting the same.

### 2. Description of the Related Art

Certain types of mobile terminal, for example mobile telephones, support various communication functions (e.g. call related functions) allowing mobility of the user. Mobile terminals have entered into increasingly widespread use, for example because of the convenience and portability thereof.

Furthermore, mobile terminals provide various input schemes to support user functions. For example, many types of mobile terminal comprise a touchscreen composed of a touch panel and a display part, allowing the user to select a specific image displayed on the display part through the touch panel, for example. Mobile terminals incorporating a touch screen typically generate a touch event corresponding to a user action (i.e. a touch), and execute an application program supporting a user function according to the touch event.

With recent advances in smart devices and communication networks, use of instant messaging services has rapidly increased around the world. For example, in a typical instant messaging service, users may create and participate in an instant messaging conversation through dialog windows displaying sent and received messages. In addition, a typical instant messaging service allows more than two users to participate in a multi-party chat or group chat.

Although screen sizes of mobile terminals have tended to increase over time, mobility and portability requirements impose inherent limitations on screen size. Accordingly, users may still experience inconvenience in manipulating dialog windows containing sent and received messages due to limited screen size. For example, as users send and receive messages in real-time during message-based conversation, many messages may be registered in a short period of time. In such a situation, as all of the exchanged messages cannot be displayed on a display unit at the same time due to size limitations, the mobile terminal typically displays only the latest messages with respect to the current time. To refer to previous messages not currently displayed, the user may have to perform a large amount of scrolling in the dialog window.

Furthermore, when multiple conversations (e.g. each conversation typically relating to a different topic) are held between several users, a user may experience difficulty in identifying and reading messages relating to a certain conversation in the dialog window. For example, messages relating to multiple conversations are typically displayed in chronological order in the same dialog window, and the user may find it difficult to follow the thread of each conversation.

The user may perform a scroll operation to locate previous messages relating to a certain conversation. However, as a rapid scroll operation, causing rapid changes in message display, may hinder understanding of message contents, a user has to slowly scroll through the dialog window. This may cause a delay in finding a desired one of the previous messages, and the user may feel fatigued during conversation.

### SUMMARY OF THE INVENTION

It is an aim of certain embodiments of the present invention to address, solve, mitigate or obviate, at least partly, at least one of the problems and/or disadvantages associated with the related art, for example at least one of the above-mentioned problems and/or disadvantages. Certain embodiments of the present invention aim to provide at least one advantage over the related art, for example at least one of the advantages described below.

Accordingly, certain embodiments of the present invention provide a message-based conversation operation method that enables a user to place a contextual mark on messages forming a conversation and rearrange messages in contextual order, so that the context of a conversation is clearly understood during utilization of a message-based conversation function, and a device (e.g. mobile terminal) supporting the method.

Certain embodiments of the present invention provide a message-based conversation operation method that can place a specific item on messages displayed on a dialog window according to user input or a preset condition, and a device (e.g. mobile terminal) supporting the method.

Certain embodiments of the present invention provide a message-based conversation operation method that enables a user to use an item placed on messages displayed on a current dialog window to directly preview contextually associated previous messages hidden from the current dialog window without scroll operation, and a device (e.g. mobile terminal) supporting the method.

In accordance with an aspect of the present invention, there is provided a method (e.g. for a mobile terminal or other type of device) for message-based conversation operation, the method comprising the steps of: detecting user input for selecting one or more messages; assigning information (e.g. contextual information) to the selected messages according to the user input; and displaying the messages according to the information. In certain exemplary embodiments, a new display mode may be output for the messages. In certain exemplary embodiments, the method may comprise the further step of storing the contextual information.

In accordance with another aspect of the present invention, there is provided an apparatus (e.g. a mobile terminal) for message-based conversation operation, the apparatus comprising: a communication unit configured to send and receive messages for conversation operation; a display unit configured to output messages; an input unit for detecting user input for selecting one or more messages; and a control unit configured to control a process of detecting the user input, assigning information (e.g. contextual information) to the selected messages according to the user input, storing the information, and displaying the messages according to the information. In certain exemplary embodiments, a new display mode may be output for the messages. In certain exemplary embodiments, the apparatus may further comprise a storage unit for storing one or more of the contextual information, messages having contextual information, and the user input.

Another aspect of the present invention provides a computer program comprising instructions arranged, when executed, to implement a method, system and/or apparatus, in accordance with any aspect, claim and/or embodiment disclosed herein. A further aspect of the present invention provides a machine-readable storage storing such a program.

Other aspects, advantages, and salient features of the invention will become apparent to those skilled in the art from the following detailed description, which, taken in conjunction with the annexed drawings, disclose exemplary embodiments of the invention.

### BRIEF DESCRIPTION OF THE DRAWINGS

The above and other aspects, and features and advantages of certain exemplary embodiments and aspects of the present invention will be more apparent from the following detailed description in conjunction with the accompanying drawings, in which:
FIG. 1 is a block diagram of a mobile terminal supporting conversation operation according to an exemplary embodiment of the present invention;
FIG. 2 illustrates a configuration of a control unit in the mobile terminal of FIG. 1;
FIG. 3 illustrates a procedure for assigning contextual information to conversation messages and displaying the same in conversation operation according to an exemplary embodiment of the present invention;
FIG. 4 illustrates a procedure for assigning contextual information to conversation messages and displaying the same in multi-party conversation operation according to an exemplary embodiment of the present invention;
FIG. 5 illustrates a procedure for assigning contextual information to conversation messages and display setting in conversation operation according to an exemplary embodiment of the present invention;
FIG. 6 illustrates a procedure for rearranging conversation messages in contextual order according to an exemplary embodiment of the present invention; and
FIGs. 7 to 14 illustrate screen representations of conversation operation according to an exemplary embodiment of the present invention.

### DETAILED DESCRIPTION OF EMBODIMENTS OF THE INVENTION

Hereinafter, exemplary embodiments of the present invention are described in detail with reference to the accompanying drawings. The following description of exemplary embodiments is provided to assist in a comprehensive understanding of the present invention, as defined by the claims. The description includes various specific details to assist in that understanding but these are to be regarded as merely exemplary. Accordingly, those of ordinary skill in the art will recognize that various changes and modifications of the embodiments described herein can be made without departing from the scope of the invention.

The terms and words used in the following description and claims are not limited to the bibliographical meanings, but, are merely used to enable a clear and consistent understanding of the invention. Accordingly, it should be apparent to those skilled in the art that the following description of exemplary embodiments of the present invention is provided for illustration purpose only and not for the purpose of limiting the invention, as defined by the appended claims.

The same or similar components may be designated by the same or similar reference numerals although they may be illustrated in different drawings.

Detailed descriptions of well-known functions, processes, features, constructions and structures incorporated herein may be omitted for clarity and conciseness, and to avoid obscuring the subject matter of the present invention.

Throughout the description and claims of this specification, the words "comprise", "include" and "contain" and variations of the words, for example "comprising" and "comprises", means "including but not limited to", and is not intended to (and does not) exclude other features, elements, components, integers, steps, processes, operations, characteristics, properties and/or groups thereof.

Throughout the description and claims of this specification, the singular forms "a," "an," and "the" include plural referents unless the context dictates otherwise. Thus, for example, reference to "an object" includes reference to one or more of such objects.

Features, elements, components, integers, steps, processes, operations, functions, characteristics, properties and/or groups thereof described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, process, activity, operation or step and X is some means for carrying out that action, process, activity, operation or step) encompasses means X adapted, configured or arranged specifically, but not exclusively, to do Y.

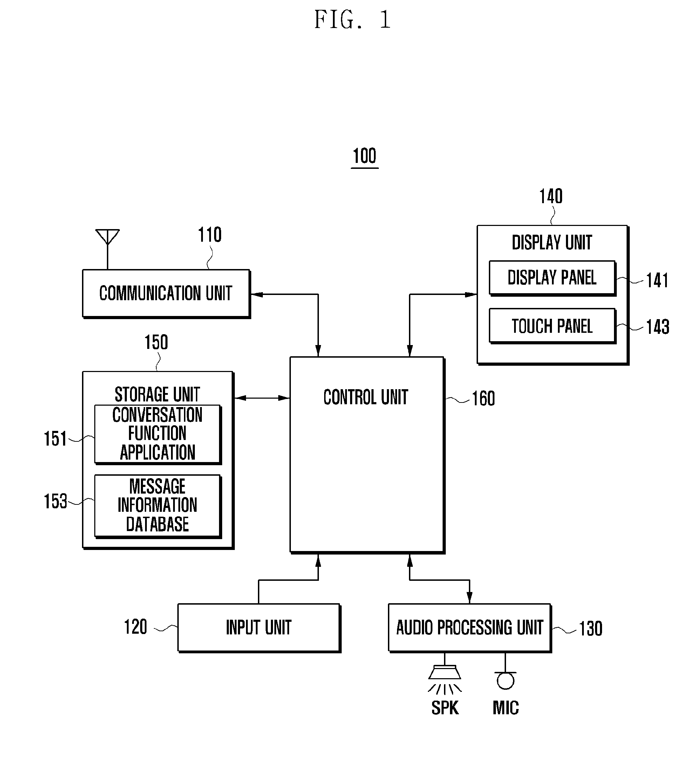

FIG. 1 is a block diagram of a mobile terminal 100 supporting conversation operation according to an exemplary embodiment of the present invention.

The skilled person will appreciate that the present invention is not limited to mobile terminals. For example, exemplary embodiments of the present invention may be implemented in the form of any other suitable type of device, whether mobile or not (e.g. a desktop computer or other type of fixed terminal or device). The skilled person will also appreciate that the present invention is not limited to conversation operation. For example, exemplary embodiments of the present invention may involve any suitable type of item exchanged between two or more parties (e.g. an item transmitted by one or more parties and/or received by one or more parties). For example, an item exchanged between parties may comprise one or more of a text item, an email, a Short Message Service (SMS) item, an image, a video, a Multimedia Messaging Service (MMS) item or any other suitable type of multimedia item.

Referring to FIG. 1, the mobile terminal 100 includes a communication unit 110, an input unit 120, an audio processing unit 130, a display unit 140, a storage unit 150, and a control unit 160.

The communication unit 110 establishes a communication channel for voice, video and data communication under the control of the control unit 160. That is, the communication unit 110 may establish a communication channel for a voice call, a data call and a video call to a mobile communication system. In particular, the communication unit 110 may establish a communication channel for a messaging service to support conversation operation of embodiments of the present invention. The messaging service may be related to text messaging, multimedia messaging or instant messaging, for example. Such a communication channel includes a transmission channel to send a message to a second terminal and a reception channel to receive a message from the second terminal. The transmission channel and the reception channel use either different frequency bands or the same frequency band.

The communication unit 110 supports transmission and reception of messages (or any other suitable type of item) during conversation operation (or any other suitable type of item exchange), and may send and receive link information between messages to and from another mobile terminal according to user selection (or other suitable type of selection, for example automatic or partially automatic selection, for example based on analysis of item content). To send link information between messages, the communication unit 110 may use at least one piece of address information of another mobile terminal. Such address information is pre-stored or be stored for management upon request or user consent.

The input unit 120 includes a plurality of alphanumeric and function keys for entering alphanumeric information and for setting various functions. The function keys include direction, side, and shortcut keys associated with specific functions. The input unit 120 generates key signals for user settings and for controlling operations of the mobile terminal 100, and forwards the key signals to the control unit 160. In particular, the input unit 120 generates various input signals needed for the conversation function of the mobile terminal 100. For example, the input unit 120 generates an input signal for selecting and activating a conversation function application, an input signal for creating a message during a conversation, and an input signal for checking a message received during the conversation.

The input unit 120 generates a user input signal for placing a mark (or other suitable type of visual indication) on messages displayed on a dialog window. The mark may be in the form of a link denoting an association, connection or grouping between related messages, for example.

For example, the input unit 120 generates a user input signal for drawing a link line linking related messages on a dialog window or for placing link symbols on related messages on a dialog window. On a dialog window, a link line is displayed as a line linking word balloons representing messages. One link line may link a number of word balloons according to user selection. Link lines are used to classify messages into conversations on different topics between participants according to context. Link lines may be represented, for example as a dotted line, straight line or curved line. A first link line linking messages of one topic is displayed differently from a second link line linking messages of another topic. That is, link lines linking messages on different topics are different in shape, thickness, color or highlight.

A link symbol may be displayed as an icon attached to a word balloon representing a message on a dialog window. Specifically, the user may place a link symbol on related word balloons on a dialog window. Link symbols may be represented as a digit, symbol, character, or figure. A link symbol may be placed at a portion of a word balloon as an overlay or close to the edge of a word balloon. In some cases, the color, shape or size of a word balloon may serve as a link symbol. The same link symbol may be placed on related word balloons. Different link symbols may also be used to indicate related word balloons.

Link symbols indicating messages on different topics may be displayed differently for distinction. For example, link symbols indicating messages on different topics may be represented as different digits, symbols, characters, or figures. Colors, shapes or sizes of word balloons may be used as link symbols indicating different topics. One link symbol may be used to indicate a number of related word balloons according to user selection.

The input unit 120 generates an input signal for selecting at least one counterpart (e.g. corresponding to another user) from a counterpart selection list in a multi-party conversation. In a multi-party conversation, a counterpart selection list is provided to enable a user to select a counterpart from among participants before message transmission and reception to and from the counterpart through a dialog window.

The input unit 120 generates an input signal for creating a group of related messages, and for merging, moving, sorting or rearranging message groups according to user control. The input unit 120 generates an input signal for redisplaying one of previous messages currently hidden from the screen. For example, the user may find and display a currently hidden previous message by use of a link line or link symbol. The input unit 120 generates an input signal for rearranging messages in contextual order according to user control and/or preset conditions. For example, word balloons listed in order of message creation by default may be rearranged in contextual order.

In various exemplary embodiments, an input signal may be generated in response to a touch event or a drag-and-drop event, for example generated by a touch panel 143 of the display unit 140 (as described below). In various exemplary embodiments, the input means may include not only the input unit 120 containing key buttons but also the touch panel 143. When the display unit 140 is provided in the form of a touchscreen, the input unit 120 may be realized using a QWERTY key map, Dvorak key map, 3*4 key map, 4*3 key map, or any other suitable type of key map, which comprise multiple keys displayable on the display unit 140.

The audio processing unit 130 includes a speaker SPK for outputting audio data during a call, outputting audio data contained in a message and outputting audio data stored in the storage unit 150, and a microphone MIC for collecting an audio signal such as a voice signal during a call. The audio processing unit 130 outputs a sound effect indicating message reception during a conversation, outputs a sound effect indicating message selection, and generates sounds corresponding to message contents according to user settings. These functions are turned off according to user settings.

The display unit 140 may include a display panel 141 and a touch panel 143. In the display unit 140, the touch panel 143 is placed on the display panel 141. The display panel 141 displays various menus of the mobile terminal 100, information input by the user, and information to be provided to the user. For example, the display panel 141 outputs various screens related to usage of the mobile terminal 100, such as an idle screen, message composition screen and call handling screen. The display panel 141 may be realized using Liquid Crystal Display (LCD) devices or Organic Light Emitting Diodes (OLED). The display panel 141 is placed above and/or below the touch panel 143.

In particular, the display panel 141 outputs various screens or windows during a conversation. For example, during message-based conversation, the display panel 141 outputs a screen for writing a message, sending the written message, receiving a message, linking related messages through a link line, placing a link symbol on related messages, displaying a counterpart selection list for counterpart selection in a multi-party conversation, displaying one of currently hidden previous messages by tracking a link line or a link symbol without scrolling the current screen, rearranging messages in contextual order, displaying packages of related messages in different display areas, and moving messages rearranged in contextual order.

The touch panel 143 is placed above and/or below the display panel 141, and generates a touch event according to contact with an object such as a finger and forward the touch event to the control unit 160. The touch panel 143 generates a drag-and-drop event corresponding to a combination of touch, drag and drop and forward the drag-and-drop event to the control unit 160. Sensing elements constituting the touch panel 143 may be arranged in a matrix form, and send information on the coordinates and type of a touch event or drag-and-drop event occurring on the touch panel 143 to the control unit 160.

The touch panel 143 determines validity of touches on various regions during a message-based conversation, and generates a touch event or drag-and-drop event accordingly. For example, during a conversation, the touch panel 143 allocates locations and effective regions to various characters contained in a message composer to support message composition according to user touch.

The touch panel 143 generates a touch event and drag-and-drop event to create and manage a link line or link symbol linking related messages according to user control, and forwards the touch event and drag-and-drop event to the control unit 160. Touch and drag-and-drop events generated by the touch panel 143 for manipulating related messages are described in detail later with reference to the drawings.

The storage unit 150 stores application programs realizing functions of embodiments of the present invention, application programs realizing user functions, and key maps and menu maps for proper operation of the display unit 140. The key maps and menu maps may take various forms. For example, the storage unit 150 may include a conversation function application 151 realizing message-based conversation and a message information database 153 for maintaining marks such as link lines and link symbols on related messages, a counterpart selection list for a multi-party conversation, and a list of messages for selection. For example, the storage unit 150 may store messages linked through the same link line as related messages. Similarly, the storage unit 150 may store messages having the same link symbol as related messages.

The conversation function application 151 supports rearrangement of messages, for example according to a link line, link symbol, a counterpart selection list for counterpart selection, a list of messages for selection, contextual order, or according to any other suitable criteria, linking, association or grouping. The conversation function application 151 is activated according to user selection and control or preset conditions, and may support composition of a message and output of a received message. The conversation function application 151 may treat a number of messages as related messages according to an input signal such as a touch event, and support display of a context-linking item such as a link line or link symbol corresponding to the related messages on the display unit 140.

A context-linking item is attached to a previous message hidden from the current screen (viewable through scrolling) and to a message that is output on the current screen and is related to the previous message.

The conversation function application 151 adjusts a link line linking related messages, a link symbol attached to related messages, grouping of related messages, and arrangement of messages in contextual order according to a user input signal.

The message information database 153 may store information, for example regarding context-linking items attached to related messages, groups of related messages, splitting and merging of message groups, and message search.

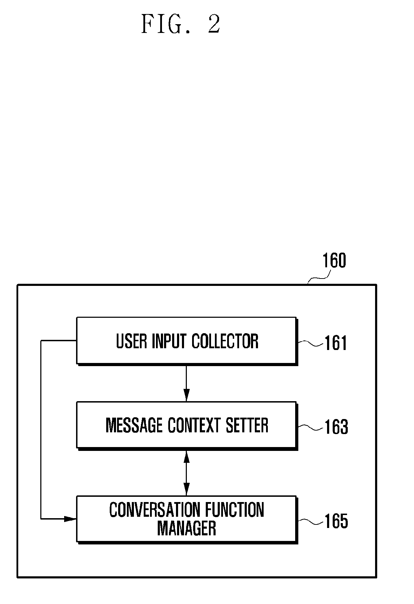

The control unit 160 controls supply of power to the components of the mobile terminal 100 for initialization. The control unit 160 controls various signal flows between the components to support the conversation function. To this end, the control unit 160 has a configuration as shown in FIG. 2, which illustrates a configuration of the control unit 160 in the mobile terminal 100.

Referring to FIG. 2, the control unit 160 includes a user input collector 161, a message context setter 163, and a conversation function manager 165.

The user input collector 161 receives a touch event or drag-and-drop event generated by the touch panel 143. That is, the user input collector 161 receives a touch event or drag-and-drop event generated by the touch panel 143 during a conversation. The user input collector 161 receives user input for manipulating messages output on a dialog window. That is, the user input collector 161 receives user input for indicating contextual association between messages according to user decision. The user input collector 161 forwards type and coordinate information of a received touch event or drag-and-drop event to the message context setter 163.

The message context setter 163 receives user input from the user input collector 161 and assigns contextual information to messages according to the user input. For example, the message context setter 163 supports generation, display, management and search of contextual information for related messages, and creates and stores mappings between user input and messages. The message context setter 163 maps or groups messages registered by the conversation function manager 165 according to preset conditions or user control. The message context setter 163 creates a context-linking item for associated messages or groups of messages and displays the context-linking item on the display panel 141 according to user control. The context-linking item includes a link line linking messages related in context and/or a link symbol attached to messages related in context.

The message context setter 163 sets a link line and/or link symbol for related messages so that a previous message hidden from the current screen is output on the current screen without scrolling.

For example, a message on a previous screen is previewed on the current screen without scrolling by use of a function associated with a link line or link symbol.

In summary, in certain exemplary embodiments, the message context setter 163 controls visualization of linking between messages related in context, assignment and storage of contextual information for messages, grouping of messages related in context, and position adjustment and arrangement of context-linking items on the display panel 141 according to user input.

When a context-linking item is selected, the message context setter 163 extracts messages linked through the context-linking item, and separately outputs the extracted messages on the display panel 141. Operations of the message context setter 163 for linking related messages and assignment of contextual information are described in more detail below with reference to the drawings.

The conversation function manager 165 invokes and activates the conversation function application 151 stored in the storage unit 150 in response to an input signal for initiating a message-based conversation, and outputs various information registered in the message information database 153 on the display unit 140 according to selected items. For example, upon activation of a conversation function, the conversation function manager 165 controls an operation to output a dialog window on the display unit 140 and sends a message written on the dialog window to another mobile terminal corresponding to a selected counterpart.

When a counterpart is selected, the conversation function manager 165 controls an operation to output the latest messages sent or received to and from the counterpart on the display unit 140. The conversation function manager 165 controls an operation to output a message received from a different mobile terminal on the display panel 141, and stores the received message in the message information database 153. The conversation function manager 165 is configured to support message transmission and reception for the message-based conversation function, and aids the message context setter 163 to create, display, search and manage messages related with newly exchanged messages.

As described above, the mobile terminal 100 supporting message-based conversation operation links messages exchanged during a conversation according to contextual information and user control, creates and stores mappings between messages related in context, or groups of messages to easily display, search and manage the messages.

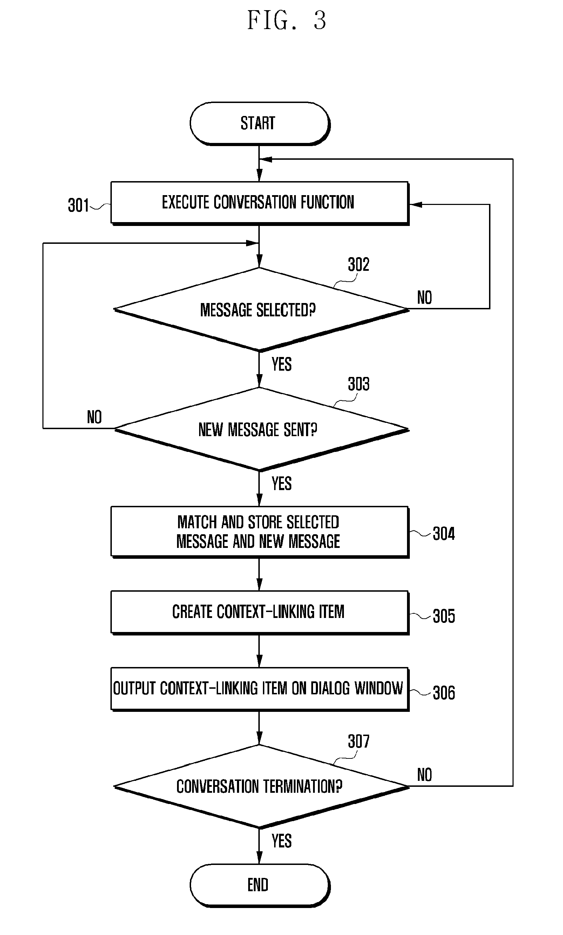

FIG. 3 illustrates a procedure for assigning contextual information to messages and displaying the same in conversation operation according to an embodiment of the present invention.

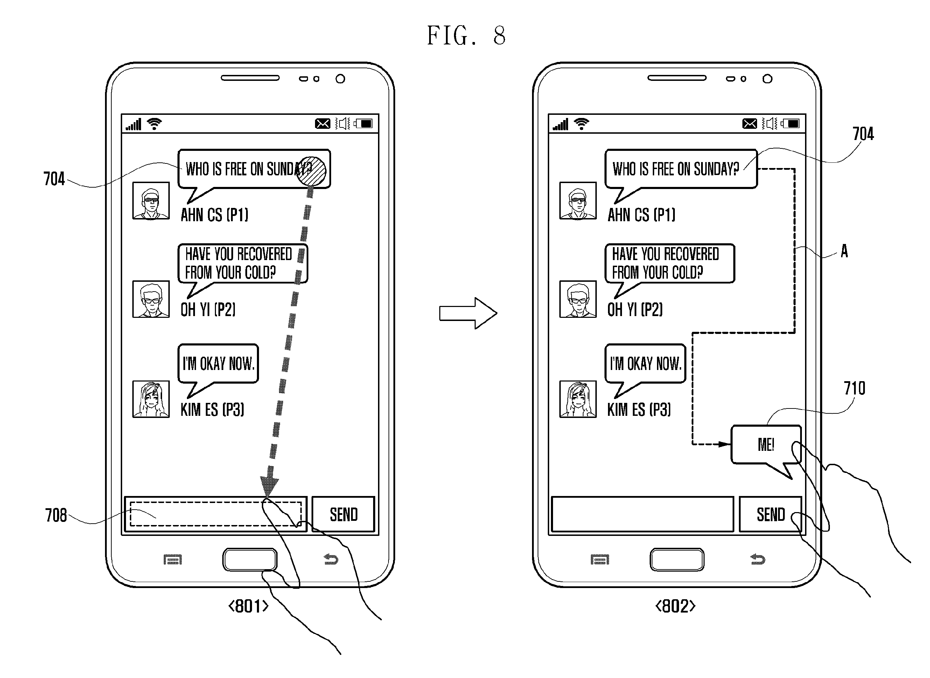

Referring to FIG. 3, in the conversation operation method, the control unit 160 of the mobile terminal 100 executes the conversation function application in response to a conversation initiation request in step 301. Messages entered by users participating in the conversation are displayed on a dialog window. Messages entered by users are displayed in order of input by default and represented as word balloons on the dialog window. When one or more messages are displayed on the dialog window, the control unit 160 determines whether at least one of the messages is selected by the user in step 302. The user generates an input signal for selecting a message by touching a corresponding word balloon. When at least one message is selected, the control unit 160 determines whether a new message is sent in step 303. That is, when the user enters a new message in the input field while selecting at least one word balloon, the new message will be output on the dialog window and sent to the counterpart. For example, referring to FIG. 8, the word balloon is selected when the user touches one of word balloons on the dialog window and drags the touched word balloon to the input field, as indicated by reference numeral 801.

Upon output of the new message, the control unit 160 creates a mapping between the selected message and new message and stores the selected message and new message together with the mapping in step 304. That is, the control unit 160 stores the selected message and new message in the storage unit 150 as messages related in context.

Thereafter, the control unit 160 creates a context-linking item between the selected message and the new message in step 305. For example, the control unit 160 creates a context-linking item to indicate contextual association between messages on the dialog window. The context-linking item is created according to user input or to user input and preset display options. A context-linking item is represented as a link line linking word balloons or as a link symbol attached to word balloons. A context-linking item could be represented by at least one of the color, shape and size of word balloons, or a combination thereof. For example, referring to FIG. 8, after a new message is entered and output on the dialog window, contextual association is set between the selected word balloon and a newly output word balloon as indicated by reference numeral 802.

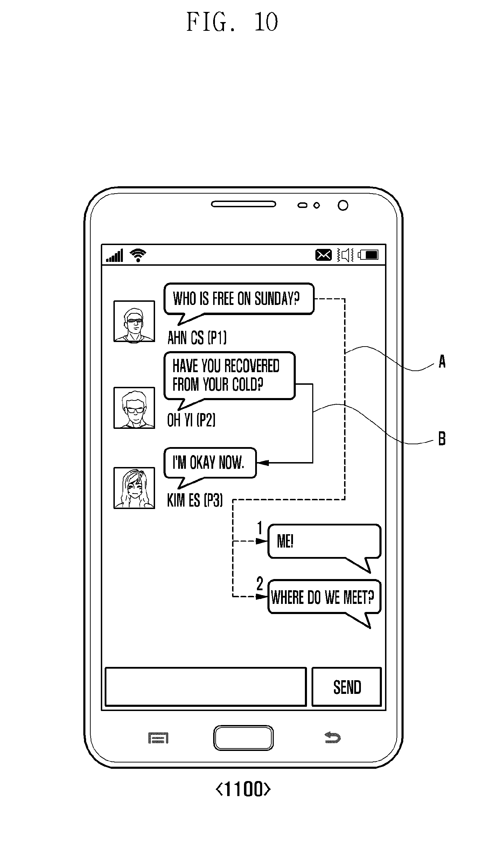

Thereafter, a link line linking the selected word balloon and newly output word balloon is drawn. The link line is represented as a dotted line, straight line or curved line. Referring to FIG. 10, link lines linking different message groups are differently represented. That is, link lines indicating different contextual associations between word balloons is distinguished by shape, thickness, color or highlight.

Contextual association between word balloons indicate that messages corresponding to the word balloons have the same topic or that the corresponding messages are in a question-answer relationship, and are also set by user decision.

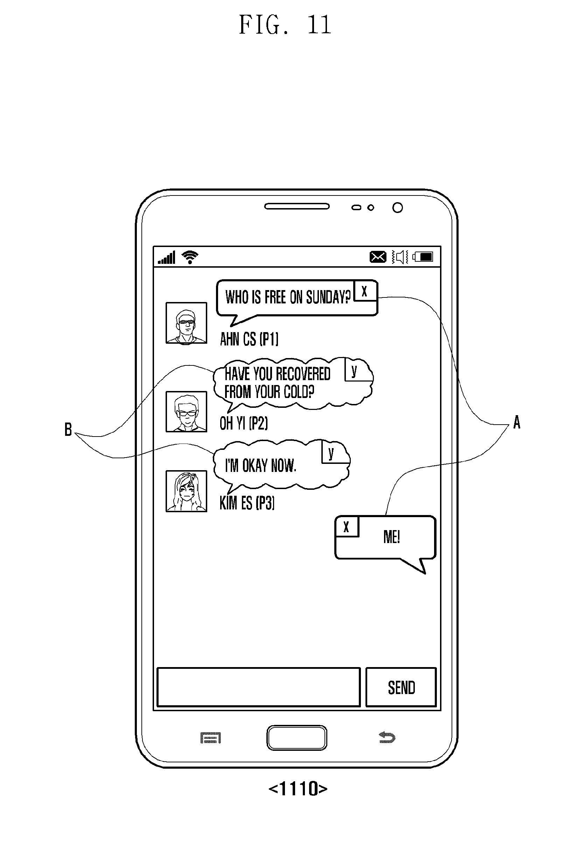

As another example, as shown in FIG. 11, the control unit 160 attaches a link symbol indicating contextual association to the selected word balloon and the newly output word balloon. When the user sends a new message after selecting a word balloon, the control unit 160 automatically attaches a link symbol to a word balloon corresponding to the new message and the selected word balloon according to preset conditions. The user sends a new message after selecting a word balloon, and then directly attaches a link symbol to a word balloon corresponding to the new message and the selected word balloon. Then, the control unit 160 stores information on the link symbol and the word balloons in the storage unit 150.

A link symbol is a link indicating related messages, and is represented by a digit, symbol, character, or figure. A link symbol is placed at a portion of a word balloon as an overlay or close to the edge of a word balloon. The same link symbol is placed on related word balloons. Different link symbols may also be used to indicate related word balloons. Link symbols indicating messages of different contexts may be displayed differently for distinction. For example, link symbols indicating messages of different contexts may be represented by different digits, symbols, characters, or figures. A context-linking item may be represented, for example by color, shape, size, highlighting, and blinking of a word balloon. The number of word balloons linkable by a context-linking item indicating contextual association may be determined, for example according to user input and may be variable.

Referring back to FIG. 3, upon creation of a context-linking item, the control unit 160 outputs the context-linking item on the dialog window in step 306. That is, the control unit 160 outputs a created context-linking item in the form of a link line or link symbol on the dialog window, or outputs the context-linking item on the dialog window using at least one of color, shape and size of a word balloon and a combination thereof. The control unit 160 determines whether an input signal for conversation termination is generated in step 307. When an input signal for conversation termination is not generated, the control unit 160 returns to step 301 and continues conversation operation.

As described above, the conversation operation method of exemplary embodiments of the present invention enables the mobile terminal to display a context-linking item according to association between messages, so that conversation participants are clearly aware of the context of messages forming the conversation.

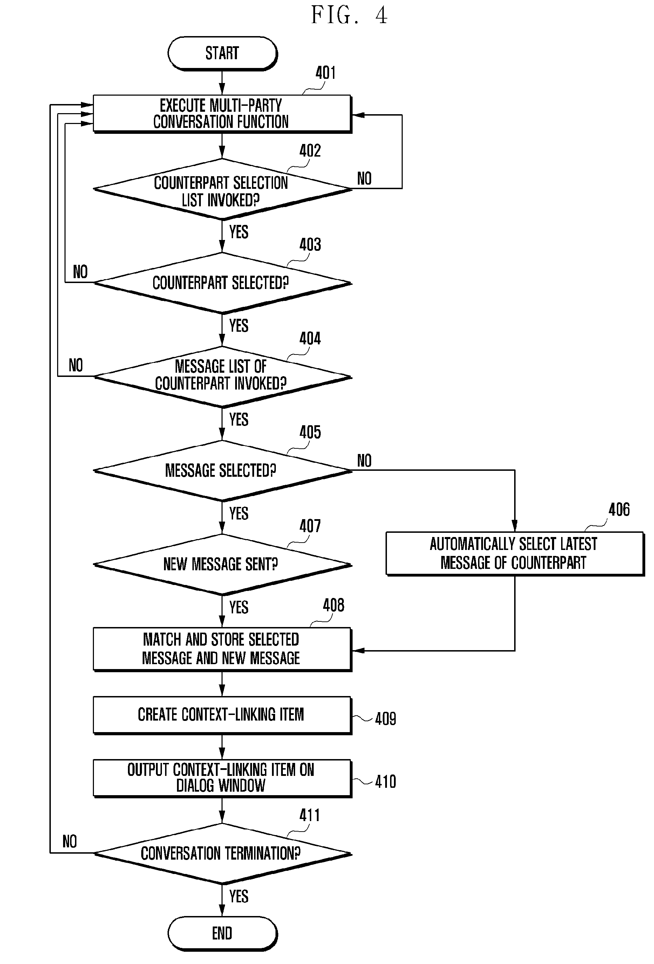

FIG. 4 illustrates a procedure for assigning contextual information to messages and displaying the same in multi-party conversation operation according to an exemplary embodiment of the present invention.

Referring to FIG. 4, the control unit 160 executes the conversation function application for a multi-party conversation in response to a conversation initiation request in step 401. Messages entered by users participating in the conversation are displayed on a dialog window. Messages entered by users are displayed in order of input by default and represented as word balloons on the dialog window.

When one or more messages are displayed on the dialog window, the control unit 160 determines whether a counterpart selection list is invoked in step 402. The counterpart selection list is a list of participants in the multi-party conversation. The counterpart selection list is output at a portion of the input field in the dialog window.

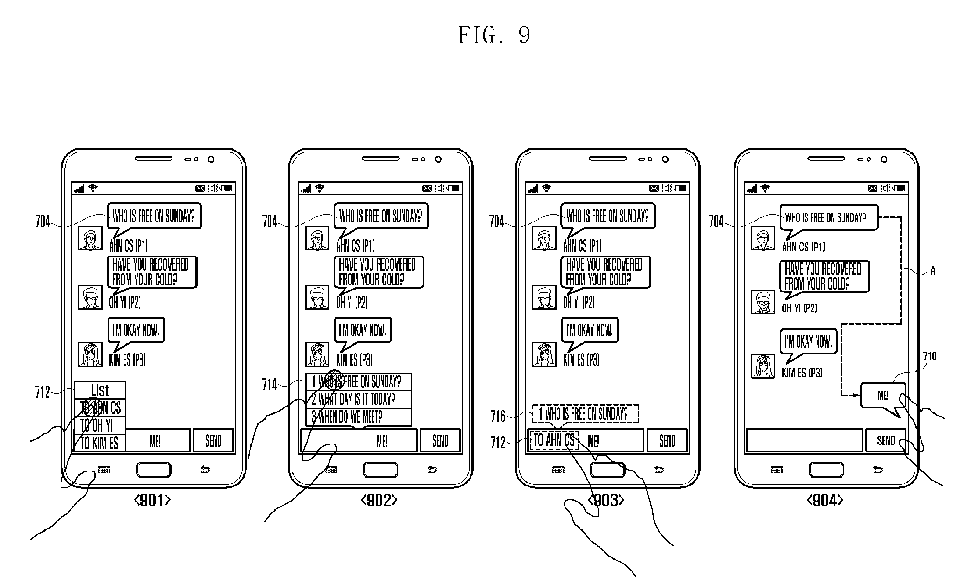

When a counterpart selection list is invoked, the control unit 160 determines whether a counterpart is selected from the counterpart selection list in step 403. A participant is selected as a counterpart from the counterpart selection list. When the counterpart selection list is not invoked, the process returns to step 401.When the counterpart selection list is output, the user refers to the list to select a counterpart for conversation, to whom a message entered by the user is sent. When entering a message in the input field of the dialog window, the user selects a counterpart for conversation by invoking the counterpart selection list before or after sending the message. For example, referring to FIG. 9, as indicated by reference numeral 901, the user selects a participant P1 as a counterpart for conversation from a counterpart selection list containing participants P1, P2 and P3.

When a counterpart is selected from the counterpart selection list, the control unit 160 determines whether a message list for the counterpart is invoked in step 404. When the counterpart is not selected, the process returns to step 401.

A message list for a given counterpart is a list of messages sorted in reverse order of transmission time by the counterpart. That is, the message list is a list of messages including the most recently received message from the counterpart, and the size thereof (the number of entries) is determined by the user. When a message list for the counterpart is invoked, the control unit 160 determines whether a message is selected from the message list in step 405.

The user selects a particular message sent by a given counterpart, attaches a context-linking item to the selected message, and sends a message corresponding to the selected message.

When entering a new message in the input field, the user selects a message by invoking the message list before or after sending the new message.

For example, referring to FIG. 9, as indicated by reference numeral 902, the user selects the latest message "Who is free on Sunday?" (output as a word balloon) from among messages sent by the selected counterpart P1.

When no message is selected from the message list, the control unit 160 automatically selects the latest message of the selected counterpart in step 406. That is, when the user does not select a particular message, the control unit 160 automatically selects a message corresponding to the most recently output word balloon for the given counterpart.

When a message is selected from the message list, the control unit 160 determines whether a new message of the user is sent in step 407. That is, after selecting a message of the counterpart, the user enters a new message in the input field and sends the new message.

When a new message of the user is output, the control unit 160 generates contextual information for the selected message and new message, and stores the selected message and new message together with the contextual information in step 408. For example, the control unit 160 stores the selected message and new message in the storage unit 150 as messages related in context. Thereafter, the control unit 160 creates a context-linking item between the selected message and the new message in step 409. For example, the control unit 160 creates a context-linking item on the dialog window to indicate contextual association between word balloons of related messages. The context-linking item is created according to user input or preset display options.

A context-linking item is represented as a link line linking word balloons or as a link symbol attached to word balloons. A context-linking item may also be represented by at least one of the color, shape, size of word balloons and a combination thereof.

Upon creation of a context-linking item, the control unit 160 outputs the context-linking item on the dialog window in step 410. For example, the control unit 160 outputs a created context-linking item in the form of a link line or link symbol on the dialog window, or outputs the context-linking item on the dialog window using at least one of color, shape and size of a word balloon and a combination thereof. For example, referring to FIG. 9, when the user enters and sends a new message as indicated by reference numeral 903, the new message is output on the dialog window and a context-linking item is automatically displayed. For example, a link line linking the latest word balloon of the selected counterpart and the new word balloon of the user is drawn as indicated by reference numeral 904. The link line is represented as a dotted line, straight line or curved line. Referring to FIG. 10, link lines linking word balloons for different entities are differently represented. That is, link lines indicating different contextual association between word balloons are distinguished by shape, thickness, color or highlight.

The control unit 160 stores information regarding a link line created by the user and word balloons linked by the link line in the storage unit 150. Referring to FIG. 11, immediately upon output of a new message of the user, the control unit 160 automatically displays a link symbol indicating contextual association between different word balloons. The control unit 160 stores the link symbol and associated word balloons together in the storage unit 150.

A link symbol is a link indicating related messages, and may be represented, for example, by a digit, symbol, character, or figure. A link symbol may be placed at a portion of a word balloon as an overlay or close to the edge of a word balloon. The same link symbol may be placed on related word balloons. Different link symbols may also be used to indicate related word balloons. Link symbols indicating messages of different contexts may be displayed differently for distinction. For example, link symbols indicating messages on different topics may be represented by different digits, symbols, characters, or figures.

A context-linking item may be displayed using color, shape, size, highlighting, and blinking at least one of the inside, border and all of a word balloon. The number of word balloons linkable by a context-linking item indicating contextual association may be determined according to user input and may be variable.

Thereafter, the control unit 160 determines whether an input signal for conversation termination is generated in step 411. When an input signal for conversation termination is not generated, the control unit 160 returns to step 401 and continues multi-party conversation operation.

As described above, the conversation operation method of exemplary embodiments of the present invention enables the mobile terminal in multi-party conversation to automatically display a context-linking item for a selected message of a given counterpart. Hence, the user easily indicates related messages, and conversation participants are clearly aware of the context of messages.

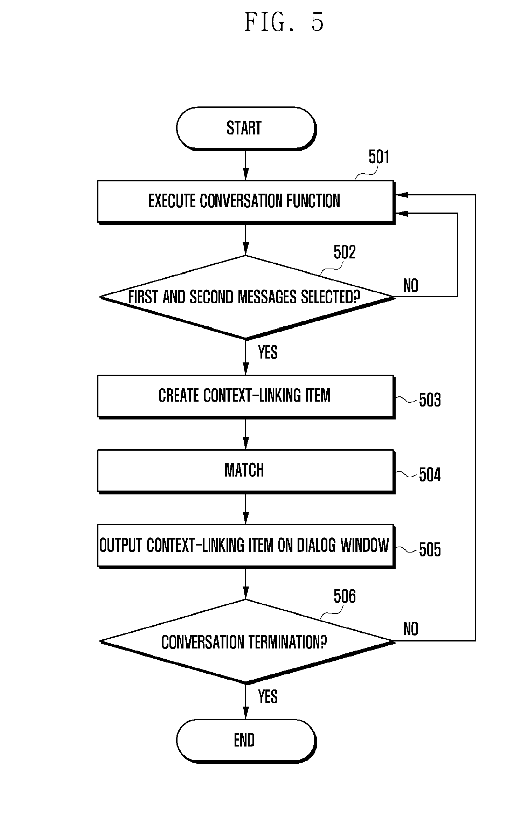

FIG. 5 illustrates a procedure for assigning contextual information to messages and display setting in conversation operation according to an embodiment of the present invention.

Referring to FIG. 5, in the conversation operation method, the control unit 160 executes the conversation function application in response to a conversation initiation request in step 501.

When one or more messages are displayed on the dialog window, the control unit 160 determines whether a first message and a second message are selected by the user in step 502. For example, the user generates an input signal for selecting first and second messages by touching corresponding word balloons.

When a first message and a second message are selected, the control unit 160 creates a context-linking item in step 503. For example, the control unit 160 creates a context-linking item to indicate contextual association between the first message and second message on the dialog window. The context-linking item is created according to user input or according to user input and preset display options. The context-linking item may be represented as a link line linking first and second word balloons or as a link symbol attached to first and second word balloons. A context-linking item may also be represented by at least one of the color, shape, and size of first and second word balloons, and a combination thereof.

Upon creation of the context-linking item, the control unit 160 creates a mapping between the context-linking item and the first and second messages to match the messages, and stores the first and second messages together with the mapping in the storage unit 150 in step 504.

After storage of the context-linking item and the first and second messages, the control unit 160 outputs the context-linking item on the dialog window in step 505.

Thereafter, the control unit 160 determines whether an input signal for conversation termination is generated in step 506. When an input signal for conversation termination is not generated, the control unit 160 returns to step 501 and continues conversation operation.

As described above, the conversation operation method of exemplary embodiments of the present invention enables the mobile terminal to display a context-linking item according to association between messages. Hence, conversation participants are clearly aware of the context of messages forming the conversation.

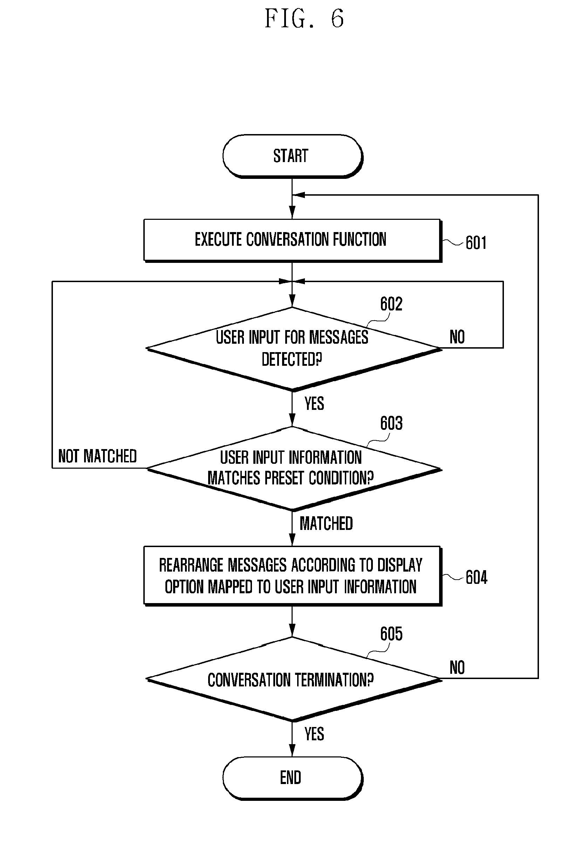

FIG. 6 illustrates a procedure for rearranging conversation messages in contextual order according to an embodiment of the present invention.

Referring to FIG. 6, in the conversation operation method, the control unit 160 executes the conversation function application in response to a conversation initiation request in step 601.

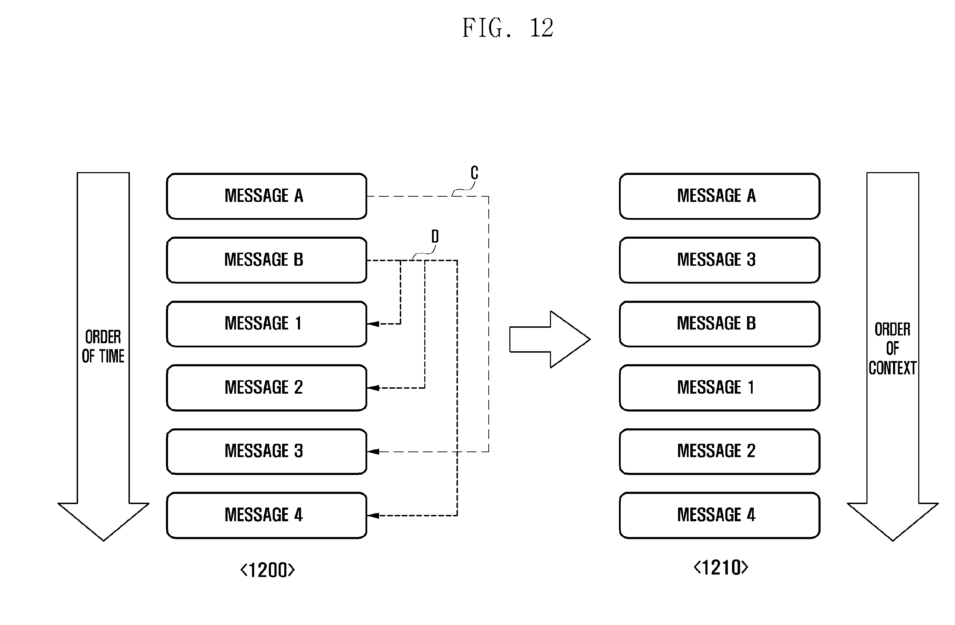

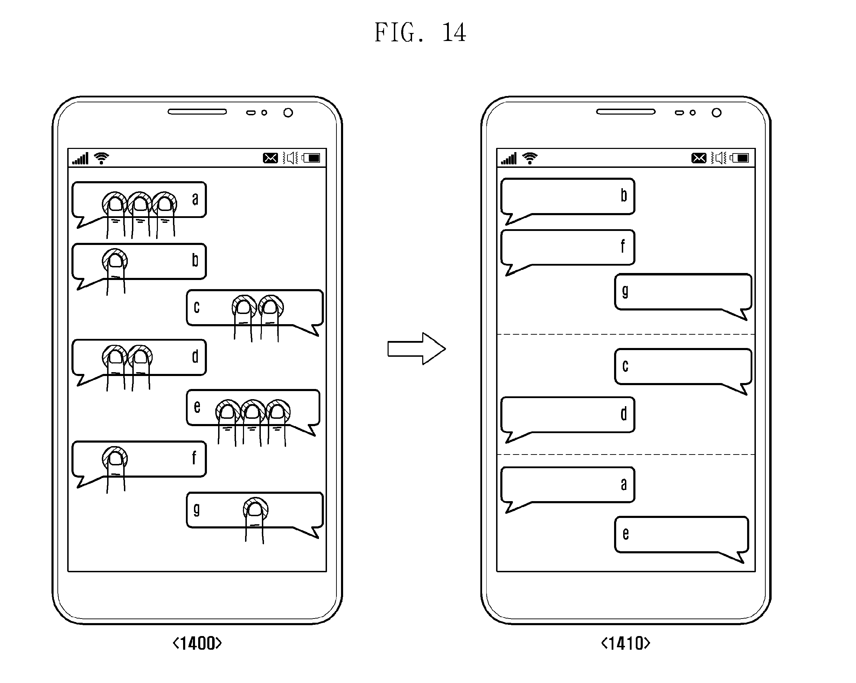

When one or more messages are displayed on the dialog window, the control unit 160 determines whether user input for the displayed messages is detected in step 602. That is, the control unit 160 detects user input for manipulating at least one message displayed on the dialog window. For example, referring to FIG. 12, when multiple messages (messages A and B, messages 1 to 4) are displayed on the dialog window, the control unit 160 detects user input (C and D) for forming links between the messages as indicated by reference numeral 1200. As another example, referring to FIG. 14, when multiple messages (messages a to g) are displayed on the dialog window, the control unit 160 detects user touch gestures on the messages with a varying number of fingers as indicated by reference numeral 1400.

The control unit 160 determines user input information applied to at least one message against a preset condition in step 603. That is, the control unit 160 compares user input information applied to a word balloon representing a message (such as number of touches, touch type, input digit, input character or input symbol) with a preset condition. For example, referring to FIG. 12, a preset condition stored in the storage unit indicates that word balloons linked by user input correspond to messages related in context. When user input C linking message A and message 3 is detected as indicated by reference numeral 1200, the control unit 160 may check the user input C against the preset condition stored in the storage unit.

As another example, referring to FIG. 14, a preset condition stored in the storage unit may indicate that word balloons receiving the same number of touches correspond to messages related in context. When multiple word balloons (a to g) are touched respectively during conversation operation as indicated by reference numeral 1400, the control unit 160 may check the number of touches applied to each of the word balloons (a to g) against the preset condition stored in the storage unit.

When the user input information matches the preset condition, the control unit 160 rearranges the messages according to a display option mapped to the user input information in step 604. For example, referring to FIG. 12, the control unit 160 determines that word balloons linked by user input C or D as indicated by reference numeral 1200 are word balloons related in context. Thereafter, the control unit 160 may group the word balloons according to user input C and D and rearrange the word balloons in contextual order as indicated by reference numeral 1210. For example, as indicated by reference numeral 1210, word balloon A and word balloon 3 are linked and placed together at an upper region of the dialog window; and word balloon B and word balloons 1, 2, 4 are linked and placed together below word balloon A and word balloon 3.

As another example, referring to FIG. 14, the control unit 160 determines that word balloons having received the same number of touches are word balloons related in context. Thereafter, the control unit 160 may rearrange the word balloons in contextual order as indicated by reference numeral 1410. For example, as indicated by reference numeral 1410, word balloons a, f, and g with one finger touch are linked and placed together at a top region of the dialog window; word balloons c, and d with two finger touches are linked and placed together at a middle region of the dialog window; and word balloons a, and e with three finger touches are linked and placed together at a bottom region of the dialog window.

To separate groups of word balloons according to context, the dialog window is split in response to a user demarcation request as indicated by reference numeral 1410. That is, the dialog window is split by demarcation lines into regions corresponding to the groups of word balloons.

Alternatively, groups of word balloons with different contexts are distinguished by different colors, shapes, or sizes. A group of word balloons with the same context has the same digit, symbol, character, or figure specified by user input. That is, different links is attached to word balloons with different contexts.

Thereafter, the control unit 160 determines whether an input signal for conversation termination is generated in step 605. When an input signal for conversation termination is not generated, the control unit 160 returns to step 601 and continues conversation operation.

As described above, the conversation operation method of embodiments of the present invention enables the mobile terminal to classify messages into groups according to context, differently display the groups of messages, and rearrange the groups of messages. As messages are rearranged in contextual order, conversation participants are clearly aware of the context of messages.

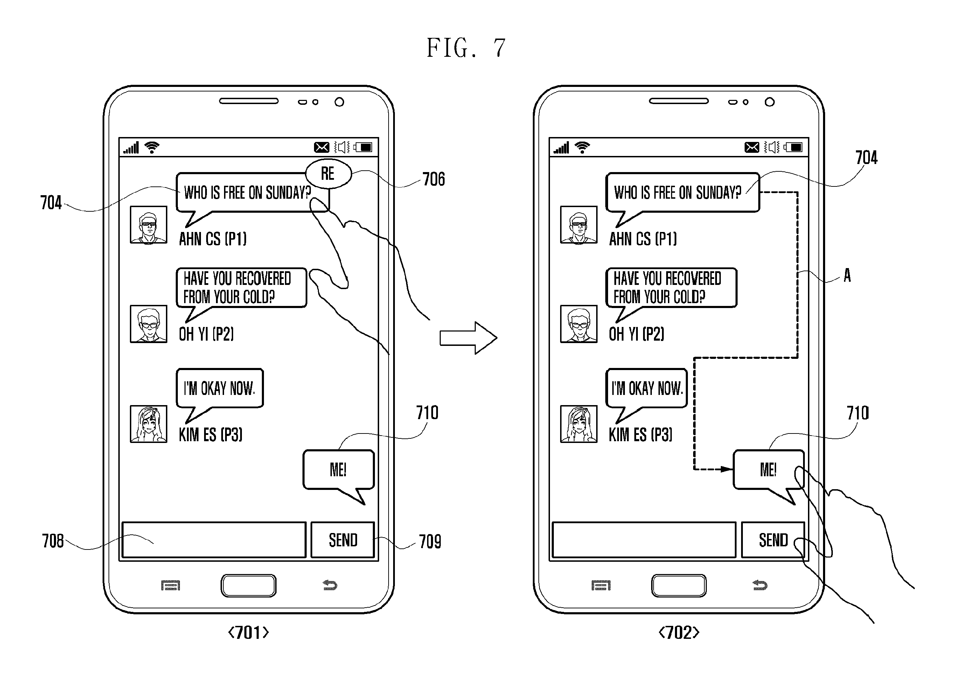

FIGS. 7 to 14 are screen representations illustrating conversation operation according to an embodiment of the present invention.

Referring to FIG. 7, the mobile terminal 100 displays a dialog window for the message-based conversation function of embodiments of the present invention as indicated by reference numeral 701. For example, a global mobile instant messenger is executed to display a dialog window for two or multi party chatting between participants. The dialog window is referred to as a chat window.

Messages (represented as word balloons) entered by several participants are output on the dialog window in order of time by default. When messages of participants are output as indicated by reference numeral 701, to indicate correspondence between an existing message and a new message, the user forms a link between messages before or after sending the new message. For example, the mobile terminal 100 permits the user to select a word balloon 704, to which the user may respond, on the dialog window before outputting a word balloon corresponding to the word balloon 704 as indicated by reference numeral 701. Thereby, the user specifies word balloons related in context.

When the user selects a word balloon 704 among word balloons displayed on the dialog window indicated by reference numeral 701, a link symbol 706 is attached to the word balloon 704. When the user enters a new message in the input field 708 and sends the new message, the mobile terminal 100 outputs a word balloon 710 corresponding to the new message and displays a context-linking item between the selected word balloon 704 and the new word balloon 710 as indicated by reference numeral 702. Selection of a word balloon is achievable by touching and pressing the word balloon for at least a preset time (long press).

A link symbol indicating contextual association is attached to the selected word balloon 704 in various manners. For example, text such as "RE", "selection" or "response" is overlaid on a portion of the word balloon 704. One of icons with various colors and shapes is overlaid on a portion of the word balloon 704.

The border of the selected word balloon 704 may be continuously varied, for example, with patterns of a semicircle, triangle, quadrangle, polygon, bump, straight line, and/or dotted line. The border or entirety of the word balloon 704 is highlighted. The mobile terminal 100 applies a blinking operation to the word balloon 704 so that the word balloon 704 is repeatedly hidden and shown from and on the screen.

In certain exemplary embodiments, any scheme for displaying a word balloon selected by the user may be used as long as it can suitably distinguish the selected word balloon from other unselected word balloons or from other word balloons of different contexts.

After selecting the word balloon 704 on the dialog window indicated by reference numeral 701, when the user enters a message in the input field 708 and presses the Send button 709, the entered message is output as a new word balloon 710. At this time, a context-linking item is displayed between the selected word balloon 704 and new word balloon 710 as indicated by reference numeral 702. For example, a dotted link line A is output between the selected word balloon 704 and new word balloon 710 on the dialog window indicated by reference numeral 702. Referring to FIG. 10, a link line B is additionally output between word balloons of different context on the dialog window indicated by reference numeral 1100.

For word balloons of different users, a link line between a first group of word balloons is displayed differently from another link line between a second group of word balloons. For word balloons of the same user, a link line between a first group of word balloons is displayed differently from another link line between a second group of word balloons output first.

Link lines indicating different contexts may be distinguished by shape (dotted line, straight line, or curved line), color, thickness or highlight. Word balloons related in context may have the same digit, symbol, character or figure, or have the same border shape. The number of word balloons linkable by a link line may be determined according to user input or app settings, and is variable. In certain embodiments, any user participating in the conversation may create a link line. In particular, when a first message output on the current screen is linked with a second message output on a previous screen through a link line or link symbol, the first message and the link line or link symbol on the current screen are used to preview the second message. That is, a link line is used to view a word balloon, which is output on a previous screen and invisible, on the current screen without screen scroll.

Referring to FIG. 11, word balloons related in context have the same shape such as a rectangle or cloud. The same character such as 'x' or 'y' is attached to portions of word balloons related in context. Word balloons of different contexts are distinguished by shape, character or a combination thereof. A character attached to portions of word balloons related in context is referred to as a link symbol.

A description will now be given of a conversation operation according to another embodiment with reference to FIG. 8. Referring to FIG. 8, when multiple word balloons are output on the dialog window as indicated by reference numeral 801, to indicate a word balloon to which the user responds before entering a reply or message, the mobile terminal 100 permits the user to select or touch a word balloon 704 and drag the same to the input field 708 on the dialog window. For example, as indicated by reference numeral 801, the user selects or touches a word balloon 704 on the dialog window and drags the word balloon 704 to the input field 708, as part of an effort to make a response to the word balloon 704. Upon activation of the input field 708, the user enters a new message in the input field 708 and presses the Send button. Then, the new message is output on the dialog window as a word balloon 710 related in context with the word balloon 704, as indicated by reference numeral 802. That is, a context-linking item is displayed between the selected word balloon 704 and the new word balloon 710 on the dialog window indicated by reference numeral 802.

As described before, a context-linking item is represented by a link line, link symbol, word balloon shape or combination thereof.

A description will now be given of a conversation operation according to another exemplary embodiment with reference to FIG. 9. Referring to FIG. 9, to permit selection of a desired counterpart among multiple participants, the mobile terminal 100 provides a counterpart selection list 712 as indicated by reference numeral 901.

In a multi-party conversation, the user may select a counterpart, to whom a message is to be sent, from the counterpart selection list 712. For example, the user invokes the counterpart selection list 712 to explicitly select a counterpart to which the user wishes to send a message.

The user enters a new message in the input field and invokes the counterpart selection list to select a counterpart before or after sending the entered message. As indicated by reference numeral 901, to respond to a word balloon 704 of counterpart P1, the user selects counterpart P1 from the counterpart selection list 712 that is output on the input field 708.

Upon selection of counterpart P1, a list of recent messages 714 sent by counterpart P1 is output as a preview, as indicated by reference numeral 902. When the user selects the most recent message 716 from the list of messages 712 sent by counterpart P1, the message entered in the input field is sent to counterpart P1 as a response to the most recent message 716, as indicated by reference numeral 903.

The new message of the user may be output as a new word balloon and link line A, which links the word balloon 704 corresponding to the latest message of counterpart P1 and the new word balloon of the user, is output on the dialog window as indicated by reference numeral 904.

Instead of link line A linking the word balloon 704 and the new word balloon 710, the same link symbol, for example an identical or similar digit, symbol, character or figure may be attached to the word balloon 704 and word balloon 710. Alternatively, a context-linking item may be represented by color, shape or size of the word balloon 704 and word balloon 710 or a combination thereof.

A context-linking item for a group of word balloons 704 and 710 is displayed differently from a context-linking item for another group of word balloons with different context. For example, link lines may be distinguished by shape, thickness, color or highlight; and link symbols are distinguished by digit, symbol, character or figure, and may also distinguished by color, shape or size of word balloons or a combination thereof.

A description will now be given of a conversation operation according to another embodiment with reference to FIG. 12. Referring to FIG. 12, when word balloons are output in order of time on the dialog window as indicated by reference numeral 1200, the word balloons are rearranged according to a preset condition or user input as indicated by reference numeral 1210. For example, word balloons listed in order of time as indicated by reference numeral 1200 are rearranged on the dialog window, in contextual order as indicated by reference numeral 1210. For example, to rearrange word balloons in contextual order, the user enters user input C and D on the dialog window as indicated by reference numeral 1200. For example, on the dialog window indicated by reference numeral 1200, message A and message 3 are linked through first user input C, and message B and messages 1, 2, 4 are linked through second user input D.

Upon linking word balloons through first user input Conversation and second user input D, the word balloons are rearranged according to different user inputs, as indicated by reference numeral 1210.

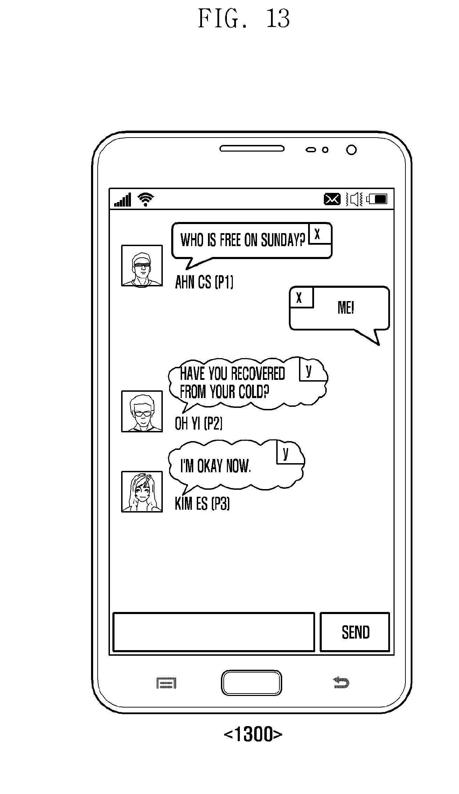

FIG. 13 is an illustration of message rearrangement in contextual order described in connection with FIG. 12. That is, when word balloons listed in order of time as indicated by reference numeral 1100 of FIG. 10 are rearranged in contextual order, the dialog window indicated by reference numeral 1300 of FIG. 13 is output.

As described above, the conversation operation method of embodiments of the present invention enables the mobile terminal to rearrange messages, which are discursively listed on the dialog window, according to contextual order. As messages are rearranged in contextual order, conversation participants may readily identify the context of messages.

A description will now be given of a conversation operation according to another embodiment with reference to FIG. 14. Referring to FIG. 14, a number of messages (a to g) is listed in order of time (or in order of output) on the dialog window, as indicated by reference numeral 1400.

The mobile terminal 100 detects user touch gestures on the messages (a to g) with a varying number of fingers. Among the messages (a to g), messages receiving the same number of touches are regarded as being related in context (preset condition). Alternatively, rearrangement of messages according to the number of received touches is regarded as rearrangement of messages in contextual order.

When multiple word balloons (a to g) are touched respectively, as indicated by reference numeral 1400, the mobile terminal 100 determines the number of touches applied to each of the word balloons (a to g) against the preset condition. As indicated by reference numeral 1410, word balloons b, f, and g with one finger touch are linked and placed together at a top region of the dialog window; word balloons c, and d with two finger touches are linked and placed together at a middle region of the dialog window; and word balloons a, and e with three finger touches are linked and placed together at a bottom region of the dialog window.

To separate groups of word balloons according to context, the dialog window is split in response to a user demarcation request, as indicated by reference numeral 1410. That is, the dialog window is split by demarcation lines into regions corresponding to the groups of word balloons.

As described above, the conversation operation method of embodiments of the present invention enables the mobile terminal to attach a specific item indicating contextual association to related messages according to user input or preset conditions, or to rearrange messages in contextual order. Hence, conversation participants may readily identify the context of messages. In addition, the user may easily find a previous message, which is not visible from the current screen, without a screen scroll, by use of a specific item attached to related messages.

The mobile terminal 100 may further include various components according to design. For example, although not shown, the mobile terminal 100 may further include a local area communication module for local area communication, a data communication interface based on wired and wireless communication, an Internet communication module for Internet access and communication, and a digital broadcast reception module for receiving and playing digital broadcasts. Although possible variations are too numerous to enumerate given the pace of digital convergence, it should be apparent to those skilled in the art that the mobile terminal 100 may further include a unit comparable to the above-described units, and one unit of the mobile terminal 100 may be removed or replaced with another unit.

A mobile terminal 100 of embodiments of the present invention may comprise any suitable device, for example a device supporting base pages comparable to a menu page. For example, the mobile terminal 100 may comprise any suitable type of information and/or communication appliance or multimedia appliance, for example a mobile communication terminal using one or more communication protocols supporting one or more communication systems, a Portable Multimedia Player (PMP), a digital broadcast receiver, a Personal Digital Assistant (PDA), a music player, for example an MP3 player, a portable game console, a smartphone, a laptop computer, or a handheld computer.

In certain embodiments of the present invention, a message-based conversation operation method and a mobile terminal supporting the same enable a user to place a specific mark on related conversation messages according to a preset condition, and to rearrange messages in contextual order. Hence, the user as a conversation participant may clearly understand the context of conversation messages.

In addition, the user may use an item placed on messages displayed on the current dialog window to directly preview contextually associated previous messages hidden from the current dialog window, without scroll operation.

It will be appreciated that embodiments of the present invention can be realized in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape or the like.

It will be appreciated that the storage devices and storage media are embodiments of machine-readable storage that are suitable for storing a program or programs comprising instructions that, when executed, implement embodiments of the present invention. Accordingly, embodiments provide a program comprising code for implementing apparatus or a method as claimed in any one of the claims of this specification and a machine-readable storage storing such a program. Still further, such programs may be conveyed electronically via any medium such as a communication signal carried over a wired or wireless connection and embodiments suitably encompass the same.

Although exemplary embodiments of the present invention have been described in detail hereinabove, it should be understood that many variations and modifications of the embodiments described herein will still fall within the scope of the present invention, as defined in the appended claims.

## Claims

1. A method for message-based conversation operation in a mobile terminal capable of sending and receiving messages, comprising:
detecting user input for one or more messages;
assigning contextual information to the one or more messages according to the user input and storing the contextual information; and
outputting a new display mode for the one or more messages according to the contextual information.

2. The method of claim 1, wherein detecting user input comprises one or more of:
detecting a drag-and-drop event starting from a message output on a dialog window and leading to an input field of the dialog window in which a new message is entered;
detecting a line linking the one or more messages;
detecting at least one of a character, digit, symbol and figure input to the one or more messages and a combination thereof; and
counting a total number of touches on each message.

3. The method of claim 1 or 2, wherein assigning contextual information comprises one or more of:
determining the one or more messages receiving an identical number of touches as having related context;
determining the one or more messages linked together by an input line as having related context;
determining the one or more messages having the same label composed of a character, digit, symbol or figure or a combination thereof as having related context.

4. The method of claim 1, 2 or 3, wherein outputting a new display mode for the messages comprises outputting a context-linking item for the one or more messages indicated by the user input.

5. The method of claim 4, wherein outputting a context-linking item comprises one or more of:
outputting a link line linking multiple messages;
displaying link lines indicating different contexts on the dialog window in a manner that the link lines are distinguished by a difference in at least one of color, thickness, shape and a combination thereof;
outputting a link symbol represented by at least one of a digit, symbol, character, figure and a combination thereof, and indicating messages related in context;
displaying word balloons representing messages in a manner that the word balloons are distinguished by a difference in at least one of shape, color, size and a combination thereof.

6. The method of any preceding claim, wherein outputting a new display mode for the messages comprises one or more of:
changing and rearranging positions of the messages on a dialog window according to the contextual information;
rearranging positions of the messages on a dialog window in order of a total number of touches on each message.

7. A mobile terminal supporting message-based conversation operation, comprising:
a communication unit configured to send and receive messages for conversation operation;
a display unit configured to output messages and detect user input for one or more messages;
a control unit configured to control a process of detecting user input, assign contextual information to the messages according to the user input and store the contextual information, and output a new display mode for the messages according to the contextual information; and
a storage unit configured to store messages having contextual information and store the user input.

8. The mobile terminal of claim 7, wherein the control unit is configured to detect user input by at least one of detecting a line linking messages, detecting at least one of a character, digit, symbol and figure input to messages and a combination thereof, and counting a total number of touches on each message.

9. The mobile terminal of claim 8, wherein the control unit is configured to determine messages as being related in context, based on one or more of: messages linked together by an input line; messages having a same label composed of a character, digit, symbol or figure or a combination thereof; and messages receiving an identical number of touches.

10. The mobile terminal of claim 7, 8 or 9, wherein the control unit is configured to display a context-linking item for messages indicated by user input in a manner that the messages are linked by the context-linking item.

11. The mobile terminal of claim 10, wherein the control unit is configured to use a context-linking item output on the current screen or a message that is linked to the context-linking item and output on the current screen, to directly display another message that is linked to the context-linking item and output on a previous screen as a preview.

12. The mobile terminal of claim 10 or 11, wherein the context-linking item is represented for display by one or more of: a link line linking multiple messages; a link symbol indicating messages related in context and composed of at least one of a character, digit, symbol, figure and a combination thereof; and at least one of a shape, color and size of a word balloon representing a message and a combination thereof.
